# EUROPEAN PATENT APPLICATION

(11) **EP 4 102 396 A1**
(43) Date of publication of application: **14.12.2022**
(21) Application number: 21178398.0
(22) Date of filing: 09.06.2021
(51) Int. Cl.: G06F 40/216, G06F 16/34, G06F 40/284, G06F 40/30

(54) **A METHOD FOR EXTRACTING TYPICAL QUOTES FROM TEXTBASED DATA**

(71) Applicant: Parlametric AB, 222 22 Lund (SE)
(72) Inventor: KÄLLSTRAND, Johan, 224 57 Lund (SE)
(74) Representative: KIPA AB

(57) **Abstract**

The disclosure relates to a computer implemented method of extracting typical quotes from text-based data. The method includes obtaining a plurality of text-based data from a plurality of users or sources, wherein each text-based data of the plurality of text-based data is provided by a user or a source from the plurality of users or sources, the text-based data is unstructured;
categorizing the plurality of text-based data by at least determining, a typical category and a typical sentiment; wherein the typical sentiment is connected to the typical category; and
determining a typical quote representing the plurality of text-based data based on the typical category and the typical sentiment.

## Description

### BACKGROUND OF THE INVENTION

### Field of the Invention

This disclosure pertains to characterizing text-based data, wherein the text-based data is unstructured. In particular, the disclosure relates to a computer implemented invention wherein user entered text-based data is categorized and structured to extract relevant information, such as relevant quotes.

### Description of the Prior Art

Adaption to real-time insight from customers, markets and employees is one of the most important success factors for any company.

But organizations drown in data they can't use, rather than benefit from it. Others collect thousands of valuable opinions and ideas without means to extract meaning from them.

Every day, billions of valuable customer and employee opinions rotten as time makes them in actual. Most systems for automatic narrative interpretation give the user more complex data instead of actionable insights. Surveys with specific questions or predefined scales and social media metrics counting likes and clicks are miss leading and biased and does not reveal why someone clicked or liked content.

Another problem in automatic narrative analytics is when applying standard machine-learning algorithms to build dictionaries, huge amounts of training data are needed. This leads to narrative analytics being only possible to use for enormous data flows, not for niche areas.

A method enabling large sample faster, more in-depth open question where it is possible to extract information such as relevant quotes to provide insights that is easy to understand would be advantageously.

### SUMMARY OF THE DISCLOSURE

Accordingly, embodiments of the present disclosure preferably seek to mitigate, alleviate or eliminate one or more deficiencies, disadvantages or issues in the art, such as the above-identified, singly or in any combination by providing a method, such as a computer implemented method, a computer program and a data processing apparatus for characterizing text-based data. The disclosure makes it possible to go through narrative data, even in real-time, to automatically extract and generate trends and/or insight. The extracted and generated trends and insights in the data is based on analysis with statistical significance. The narrative data may be surveying sources, social media, customer interactions, digital media and/or traditional media. Because the input data is text-based and unstructured, such as story driven, and the analysis is performed using natural language processing algorithms, click and like metrics can be avoided and instead the output may provide analysis about why the users, customers etc likes or dislikes certain aspects.

In one first aspect of the disclosure, a computer implemented method of extracting typical quotes from text-based data. The method may include obtaining a plurality of text-based data from a plurality of users or sources. Each text-based data of the plurality of text-based data may be provided by a user or a source from the plurality of users or sources. The text-based data may be unstructured. The method may further include categorizing the plurality of text-based data by at least determining a typical category and a typical sentiment. The typical sentiment may be associated to the typical category. The method may also include determining a typical quote representing the plurality of text-based data based on the typical category and the typical sentiment.

In one aspect of the disclosure, a computer implemented method of characterizing text-based data is described. The method may include obtaining a plurality of text-based data from a plurality of users or sources, wherein each text-based data of the plurality of text-based data is provided by a user or a source from the plurality of users or sources, the text-based data is unstructured.

The analysing each of said text-based data for at least one of category words and unique words, and related sentiment words and/or expressions surrounding said at least one of category words and unique words.

The method may further include providing a scoring of each text-based data based on the at least one of category words and unique words, and related sentiment words and/or expressions surrounding the at least one of category words and unique words.

The method may also include outputting a summary of the plurality of text-based data based on the scoring.

In a second aspect, a computer program is described. The computer program includes instructions which, when the program is executed by a computer, cause the computer to carry out the method here in described.

In a third aspect, a computer-readable medium is described. The computer-computer readable medium may include instructions which, when executed by a computer, cause the computer to carry out the herein described method.

In a fourth aspect, a data processing apparatus is described. The data processing apparatus may include means for carrying out the method herein described.

### BRIEF DESCRIPTION OF THE DRAWINGS

These and other aspects, features and advantages of which examples of the disclosure are capable of will be apparent and elucidated from the following description of examples of the present disclosure, reference being made to the accompanying drawings, in which:
Fig. 1 is illustrating of a schematic example of a method for characterizing text-based data;
Fig. 2 is illustrating a schematic diagram to illustrate categories and sentiment words/expressions but also some basics of the scoring;
Fig. 3 is illustrating of a schematic example of a flow-chart related to analysis of text-based input data and generating a dictionary;
Fig. 4 is illustrating a schematic 2D-vector for performing the scoring;
Fig. 5 is illustrating a schematic example of a 2D-vector for performing the scoring;
Fig. 6 is illustrating an example of how output data may be summarized based on an obtained score;
Fig. 7 is illustrating of a schematic example of a method for extracting typical quotes from text-based data;
Fig. 8 is illustrating of a schematic example of extracting typical quotes from text-based data;
Fig. 9 is illustrating a representation of a result including representative quotations for each cluster;
Fig. 10 is illustrating factors that explained >90% of the positive impressions found in the analysis;
Fig. 11 is illustrating representative quotes from the comments obtained from the analysis; and
Fig. 12 is illustrating a narrative analysis of completely open text responses.

### DESCRIPTION OF EXAMPLES

Specific examples of the disclosure will now be described with reference to the accompanying drawings. This disclosure may, however, be embodied in many different forms and should not be construed as limited to the examples set forth herein; rather, these examples are provided so that this disclosure will be thorough and complete, and will fully convey the scope of the disclosure to those skilled in the art.

The following disclosure focuses on examples of the present disclosure applicable for characterizing text-based data or categorizing text-based data, such as unstructured narrative data. The disclosure makes it possible to go through unstructured narrative data, even in real-time, to automatically extract and generate trends and/or insight from it. The extracted and generated trends and insights in the data is based on analysis with statistical significance. The text-based data may be survey sources, such as forms to fill out with unstructured text, social media, customer interactions, digital media and/or traditional media etc. Because the input data is text-based and unstructured, such as story driven, and the analysis is performed using natural language processing algorithms, click and like metrics can be avoided and instead the output may provide analysis about why the users, customers etc likes or dislikes certain aspects. The method may also be used to find variations, such as anomalies or trends, in a flow of text-based data.

Such a method will provide the advantage of adapting to real-time insights and/or trends from users, for example, customers, markets, politics, and/or employees. Examples could be to find out about what employees are satisfied with or dissatisfied with at their workplace, what customers thinks about certain products, finding trends in social medias or in customer interactions. Trends could be related to political trends, such as geopolitical trends. Analysing text-based data, such as from online media, social media and/or traditional media etc, may be used for predicting trends in the financial market based on hot topics and/or to catch new trends or changes that could affect the financial market and/or provide investment opportunities at an at an early stage.

The method disclosed herein may be implemented on a computer or a computer system, such as a computer network or a server. The method may be implemented by special-purpose software (or firmware) run on one or more general-purpose or special-purpose computing devices. In this context, it is to be understood that each "element" or "means" of such a computing device refers to a conceptual equivalent of a method step; there is not always a one-to-one correspondence between elements/means and particular pieces of hardware or software routines. One piece of hardware sometimes comprises different means/elements. For example, a processing unit serves as one element/means when executing one instruction, but serves as another element/means when executing another instruction. In addition, one element/means may be implemented by one instruction in some cases, but by a plurality of instructions in some other cases. Such a software-controlled computing device may include one or more processing units, e.g. a CPU ("Central Processing Unit"), a DSP ("Digital Signal Processor"), an ASIC ("Application-Specific Integrated Circuit"), discrete analog and/or digital components, or some other programmable logical device, such as an FPGA ("Field Programmable Gate Array"). The data processing device 10 may further include a system memory and a system bus that couples various system components including the system memory to the processing unit. The system bus may be any of several types of bus structures including a memory bus or memory controller, a peripheral bus, and a local bus using any of a variety of bus architectures. The system memory may include computer storage media in the form of volatile and/or non-volatile memory such as read only memory (ROM), random access memory (RAM) and flash memory. The special-purpose software may be stored in the system memory, or on other removable/non-removable volatile/non-volatile computer storage media which is included in or accessible to the computing device, such as magnetic media, optical media, flash memory cards, digital tape, solid state RAM, solid state ROM, etc. The data processing device 10 may include one or more communication interfaces, such as a serial interface, a parallel interface, a USB interface, a wireless interface, a network adapter, etc., as well as one or more data acquisition devices, such as an A/D converter. The special-purpose software may be provided to the control unit or data processing device on any suitable computer-readable medium, including a record medium and a read-only memory.

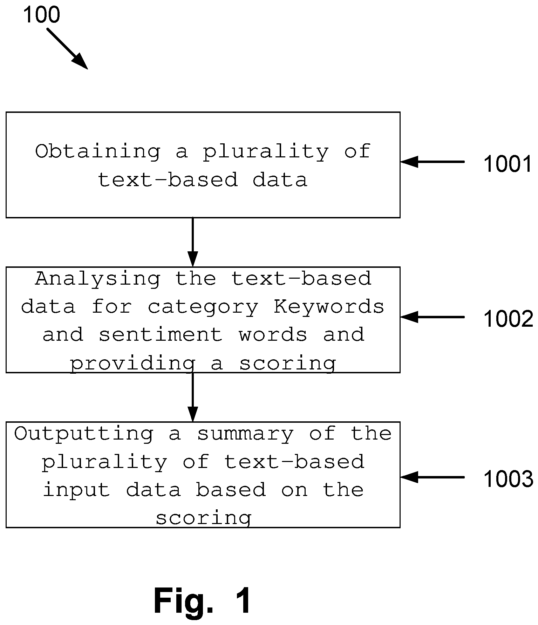

Fig. 1 is illustrating of a schematic example of the claimed method 100, which may be a computer implemented method, of characterizing text-based data. The text-based data may be unstructured narrative text.

A first step includes obtaining a plurality of text-based data 1001. The text-based data may be obtained from a plurality of users and/or sources. For example, each text-based data of the plurality of text-based data may entered by a user from the plurality of users. In other examples, the text-based data may be published information, such as information published in social media, digital media and/or traditional media. The text-based data may be obtained from surveying sources, social media, customer interactions, digital media and/or traditional media. The text-based data may be full narrative text, such as story-driven and not based on clicks and likes metrics. An example could be a reply to an open question, such as posted on a webpage and/or through social media.

The text-based data may be obtained from are a survey made as a dedicated homepage with open questions to be answered by users. Additionally, and/or alternatively, the text-based data may also be obtained from comments left in social media, either in response to a dedicated question or spontaneous comments to an article, video clip, commercial and/or in response to a comment by another user. Additionally, and/or alternatively, the text-based data may also be obtained from articles published in traditional media and/or digital media, such as blogs, bulletins or forums. Additionally, and/or alternatively, the text-based data may be obtained by e-mail, SMS and/or other types of text-based communication means.

A second step may include analysing 1002 each of the text-based data for category words, unique words and sentiment words and providing a scoring of each text-based input data. The scoring may be based on the occurrence of keywords related to the categories and/or unique words and the sentiment connected to these keywords and/or unique words. The sentiment may be sentiment words and/or expressions, but could also include symbols such as exclamation marks or emojis, such as smiley symbols. The categories may include a plurality of keywords related to a particular category. Unique words are words that does not belong to a category or words which has not yet be categorised.

The analysis may utilize a dictionary created for the category and sentiment words. The dictionary may also include unique words. The dictionary may be built using open source data and also trained on open-source data. The dictionary may be obtained and trained by Artificial Intelligence (AI). In some examples are the dictionary for the category words, i.e. the keywords related to each category, and/or unique words created using AI, and the sentiment words may be a pre-defined list of sentiment words and expression.

The analysis may be done by a Natural Language Processing algorithm. Preferably, an algorithm having content adaptive capability to be able to more accurately analysing different type of areas, such a niche area. The adaption may help to compensate for difference in language discourse. For example, words or syntaxes could have different meaning depending on the area. For example, may identical words used in different areas, such as fashion customers, gamers, building, car owners, employees and patients, have different meanings. This may be done by adapting the dictionary depending on the area of text-based input area using auto-creation. Adaption of the dictionary may also mean adaption of the training using the AI.

The analysis and scoring may be based on quantifying the category words and sentiment words surrounding keywords related to the categories. This may be done by using proximity, such as a moving window, to quantify the category and sentiment words surrounding a keyword. The size of the moving window may be obtained from the training of the dictionary. The moving window may in some examples change its size dynamically depending on the input data. In other examples may the size of the moving window is fixed to typical distances between category keywords or unique words and sentiment words. The size of the window may depend on various factors, such as the source of the text-based input data, the categories to be evaluated, etc. For example, depending on the source of the text-based input data, the sentiment level may need to be accounted for. The sentiment level may relate to how the sentiment words are used, for example, some type of text-based input data has a high level of sentiment words and expressions while other type of texts has a very low level. Depending on the source, the sentiment level may vary between users providing the text-based input data. This may be accounted for, at least to some extent, by the training the dictionary to obtain an optimal proximity window.

In some examples, training may be used to predict the sentiment level of the text-based input data so that it can be accounted for when performing the quantification and scoring.

Setting the proximity window and/or predicting the sentiment level, may be useful to give all text-based input data used in an analysis the same weight. When the text-based input data comes from various sources and/or users, differences in the sentiment level between various input data may otherwise give some sources and/or users having a high sentiment level a weight than sources, users having a lower sentiment level. By being able to level various sources and/or users, their information may be given the same weight in the analysis and in the final result.

A sentiment word or expression is a word or expression that may convey a positive or negative view. A sentiment word or expression could also give a neutral sentiment. Other types of emotions may be associated with the sentiment words, such as the five base emotions, e.g. joy, fear, sadness, disgust and anger. Depending on the word or expression used and its location in relation to a keyword related to a category or unique word, a scoring is allocated. For example, is the word or expression located before or after the keyword, and how many words are in-between the keyword and sentiment word or expression. The algorithm may also take into account how many category and/or sentiment words are associated to a keyword when providing a scoring for the text-based data.

The algorithm used for the analysis and the scoring may be based on a vector system. In some examples, the vector system is a 2-dimensional vector.

By adapting this approach, the analysis may be performed with statistical significance.

To further improve the analysis and provide more information, the algorithm may profile each of the text-based data provided as an input and clustering group of text-based data depending on determined profiles.

The method may also include outputting 1003 a summary of the plurality of text-based data based on the scoring. The summary may include statistic over the sentiment and the categories in the text-based data provided by the users. The statistic may be clustered to provide information related to different aspects.

As part of the summary, the analysis may provide representative quotes based on the scoring. The quotes may come from the user input data or be synthetically constructed. Different quotes may be used to for different sentiments or categories, but also related to different clusters.

Another possibility is to use text-based data from multiple sources, such as, for example, at least one of social media, digital media, traditional media, and surveys, and performing cross-validation between the different sources.

Using multiple sources may not only provide more data but by using cross-validation between sources a better representation of the reality may be obtained from the analysis. A better representation may provide a better accuracy in the output data. For example, different people use different medias and also express different types of opinions based on the media and the anonymity the media provides. This may include different sentimental levels.

Cross-validation using multiple sources may therefore be used to validate the relevance of a result. Cross-validation between multiple sources may be used to remove data that is not relevant. Data that may not be relevant could be social media phenomenon, such as trolls, miss leading information and false information.

Multiple-sources validation may be used to create better dictionaries for the narrative analytics to reach more valid and specific hits of categories and sentiments.

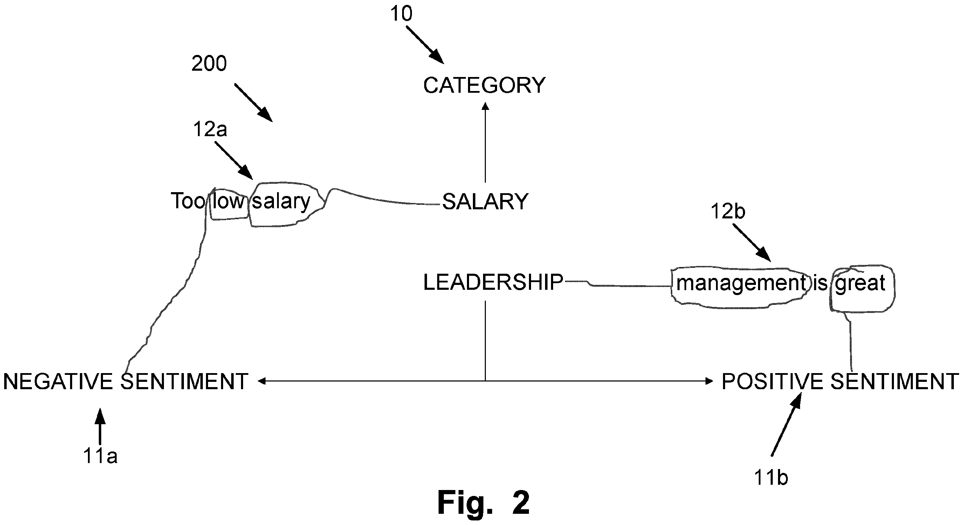

Fig. 2 is a schematic diagram 200 to illustrate categories and sentiment words/expressions but also some basics of the scoring. The schematic diagram 200 is only used to illustrate what the different terms are and how they are used. Along the y-axis, the categories 10 are illustrated. In the illustrated example, the categories are "SALARY" and "LEADERSHIP". In some examples, these categories may be sub-categories to a main category, such as "WORKPLACE".

In the illustrated example, one exemplary text-based input data is provided which has been divided into two parts 12a, 12b. In the illustrated example, the first part of the exemplary text-based input data reads "Too low salary" 12a, and the second part reads "management is great" 12b. In the example, the words or expressions "low" and "great" are sentiments. "low" is defined as a negative sentiment 11a and "great" is defined as a positive sentiment 11b. A negative sentiment 11a is in this example provided with a negative scoring which is illustrated by the positioning the first part of the exemplary input data 12a in the negative half of the x-axis. A positive sentiment 11b is in this example provided with a positive scoring which is illustrated by the positioning the second part of the exemplary input data 12b in the positive half of the x-axis. Sentiment words and/or expressions having a neutral meaning can also be considered as part of the scoring.

The term "salary" in the first part of the exemplary input data 12a is a keyword connected to the category "SALARY", and the term "management" in the second part of the exemplary input data 12b is a keyword connected to the category "LEADERSHIP". By going through the text-based input data, and quantifying the keywords related to each category and the associated sentiments words and/or expressions surrounding each keyword, a scoring can be created for each category.

As previously described herein, further characteristics can be taken into account when performing the quantification and obtaining the scoring. Examples of characteristics that may be included are positioning of the sentiment word and/or expression, such as before or after the keyword; how many sentiment words and expressions are used for each keyword; how many keywords associated by a category is provided in each text-based input data; the distance between the keyword and the connected sentiment word and/or expression, etc. By profiling each of the text-based data provided as an input and clustering group of text-based data depending on determined profiles, it may be possible to provide further information from the input data, such as differences between users and/or sources which are to some extent connected. For example, profiling and clustering may be used to segmenting the output.

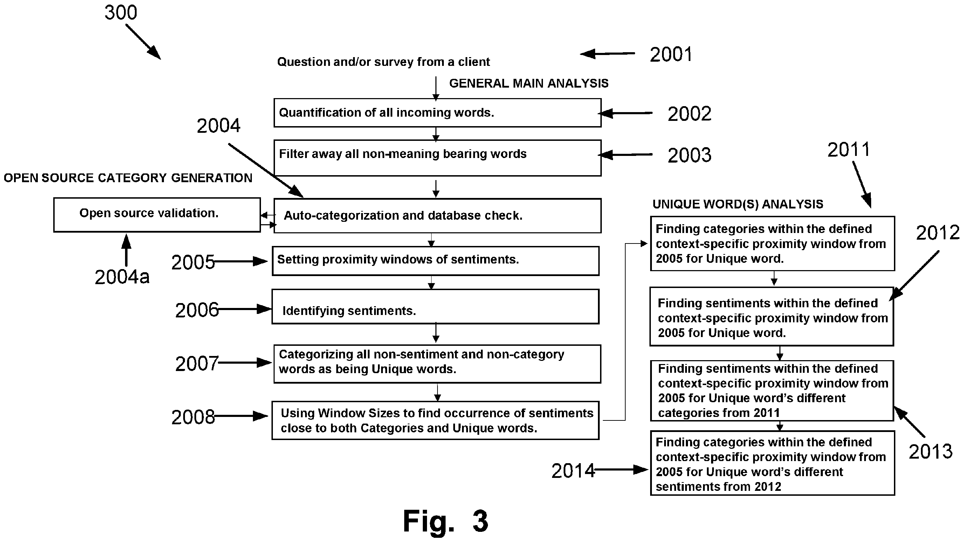

Fig. 3 is illustrating of a schematic example of a flow-chart 300 related to analysis of text-based input data and generating a dictionary. The method may include the following steps:
An initial step 2001 where a client has a question. Typically, the client wants an up to date understanding and analysis of open-text based question. The information to be analyzed may be obtained from scanning sources, such as social media, blogs, publications etc. The type of sources may be defined to be relevant for the analysis, such as within a particular area like finance, politics, marketing impact, product understanding etc. The information to be analyzed may also come from a company employment survey or analyzing a customer support speech. Other sources for the information to be analysed could be media publications, and so on.

The incoming words in the text-based input data may then be quantified 2002. This can be done by keeping identities of respondents to ensure one input per identity but at the same time making the outcome completely anonymous.

To clear up the data, all non-meaning bearing words may be filtered out 2003. Non-meaning bearing words are typically words like "and", "or" and "the" and similar.

An auto-categorization and database check 2004 may then be performed. This step is to ensure correct categorization. In this step, the remaining words from the step 2003 are checked to a database to quantify most occurring categories, for example by quantifying category related keywords in the text-based input data. The step may include a validation 2004a with text-based data, such as open-source data. The validation 2004a, may be defined as a category generation, or as an auto-creation. The category generation may be performed to improve the accuracy of the scoring. The category generation may be performed on general open-source data. During this step 2004a, the words from step 2003 may be checked with millions of open sources, such as social media, articles, and webpages. If a certain word occurs significantly more in one type of sources and not in others, the theme of those sources may thus be the auto-generated category, or auto-creation, assigned to that word.

An alternative to perform the auto-generation or auto-creation on general open-source data could be to use specific open sources. An advantage with this may be that the databases created may be niched based on the input data and therefore more relevant and representative for the analysis, for example when an analysis is carried out for narrow subject-areas or topics. This may be performed by analyzing the text-based input data for sub-categories. The sub-categories may then be linked to a main category. When performing the auto-generated category, or auto-creation, instead on performing the validation of general open-source data, the validation may be performed on opensource data within the area of the main category. The step may then be performed as for the general open-source data, by quantifying the words in the input data and compare them to the open source data within the main category. If a certain word occurs significantly more in one type of sources and not in others within the area of the main category, the theme of those sources may thus be the auto-generated category, or auto-creation, assigned to that word. Thereby generating categories and sub-categories. The new category and sub-category connectors found through the open-source scanning may increase the correctness and specificity of the analysis, in particular for niched fields.

Another step may be to setting proximity windows of sentiments 2005. To find proper sentiments (for example negative, neutral, positive), the area adequate rules of sentiment words occurrence in relation to the category words may need to be found. This may be done by tracking open sources and measuring typical distances of sentimental words and/or expressions to category related words. This may provide a dynamic size of the window that could vary between different category words, sentimental words and/or expressions, or characteristics of the text-based input data types etc. Alternatively, the proximity window is set to a pre-defined fixed distance.

Identifying sentiments 2006. The sentiments may be found in pre-defined lists or be generated using AI. All sentiments may then be identified in the text-based input data.

Categorizing 2007 all non-sentiment and non-category words as being unique words. The unique words are the words that has not been categorized in step 2004, 2004a or identified as sentiment words and/or expressions under step 2006.

When all the words have been categorized, either as a category word, as a unique word or as a sentiment word and/or expression, the window sizes may be used 2008 to find occurrence of sentiments close to both categories and unique words.

Words categorized as unique may be further analyzed. The analysis may include, some but not all of the following steps; finding categories 2011 within the defined context-specific proximity window defined in step 2005 for the unique words. Categories surrounding unique word may be quantified. Finding sentiments 2012 within the defined context-specific proximity window defined in step 2005 for the unique words. Sentiments surrounding unique word are quantified. Finding sentiments 2013 within the defined context-specific proximity window defined in step 2005 for unique words' different categories found in step 2011. Also, the analysis may include finding categories 2014 within the defined context-specific proximity window defined in step 2005 for Unique words' different sentiments from step 2012.

The below is an example to try to further explain the auto-categorization, or auto-creation process. The input data may come from a completely free text input to be filled in from any User Interface, could be spoken and converted to text, related to a free, non-leading question / topic.

From word lists, words are quantified:

| | | | | |
|---|---|---|---|---|
| Boss | 2 | L | | |
| Leader | 3 | L | | |
| Salary | 5 | | | |
| Jump | 4 | | | |
| King | 4 | | | |
| Cheese | 3 | | F | |
| Management | 2 | L | | |
| Food | 1 | | F | |
| P2300 | 2 | | | U |

When scanning the words in other sources (the auto-categorization), the categories can be defined. Looking in public PDFs, the words marked L(=leadership) above were found mainly in Management PDFs. Hence, building a category validation of those words leads to an auto-generated categorization.

The words labelled F(=food) where mainly found in PDF resources tagged Food.

The PDF resources may not be restricted to PDFs but also contains online information like newspapers and webpages.

The advantage here is that the categorization can be dynamic and time-relevant, meaning that the categories does change over time and new ones are put forth (like crypto).

When the auto-categorization has taken place, the sentiment proximity window may be added to the equation, the occurrence of pre-defined negative or positive words, sad or angry ones and so on, before or after the category words defined above are identified. This can connect Leadership to Negativity, thus identifying that in a typical dataset there are specific management issues.

The windows may be category dependent and these windows may be set using machine-learning of finding the typical absolute distances between category building words and sentiment words, making a more valid analytic framework.

The words at some frequencies (occurrence), not being normal non-informational words (like "if" "but" "and" and so on) and not being category words are auto-identified being Unique (U above) and these are also sentiment analyzed using the auto-set window mentioned above.

It is then possible to go back to previous steps - for example finding sentiments surrounding a unique word and also tracking categories surrounding a Unique word to understand the unique word.

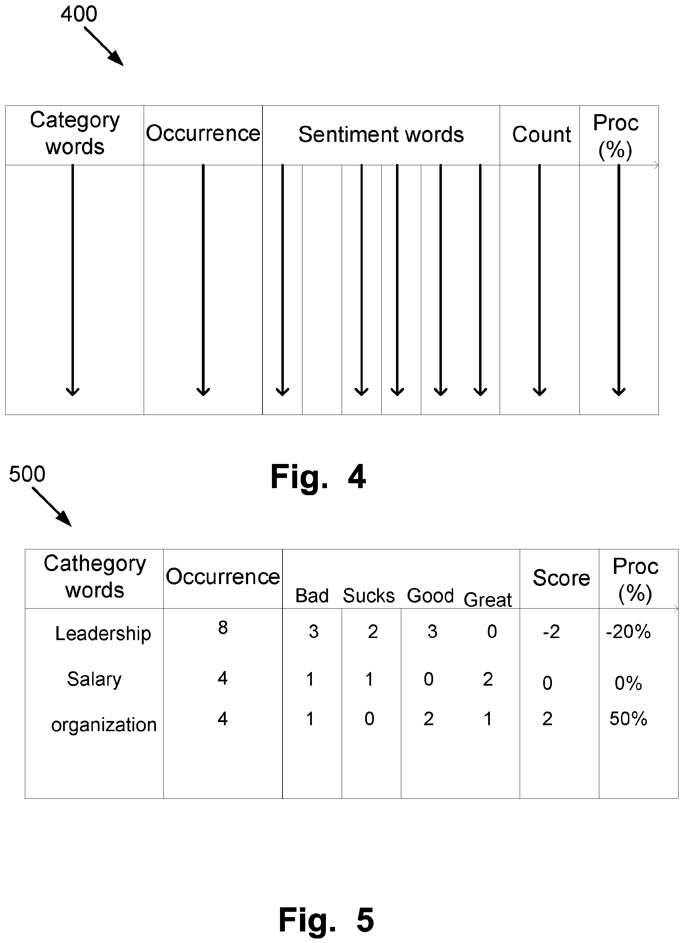

Fig. 4 illustrates a schematic 2D-vector 400 for performing the scoring, and Fig. 5 is illustrating a schematic example of a 2D-vector 500 for performing the scoring. In the example, words related to the category "Leadership" has been found 8 times in the text-based input data, 5 times has the word it been used with a negative sentiment word and 3 times with a positive. The score is therefore -2 and the percentage, which provides the overall sentiment for this category word is there for -20%. Words related to the category "Salary" has been found 4 times, 2 times with a negative sentiment and 2 times with a positive. Hence, the overall sentiment may be considered as neutral.

Words related to the category "organization" has been found 4 times, 1 time with a negative sentiment and 3 times with a positive. Hence, the overall sentiment may be considered as positive at 50%.

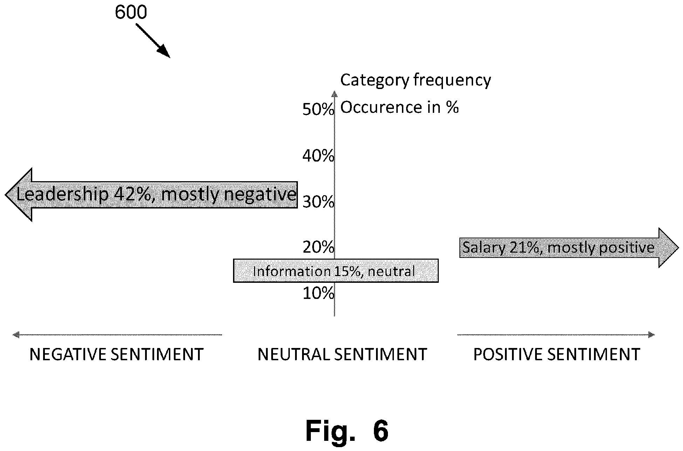

Fig. 6 is illustrating an example of how output data may be summarized 600 based on an obtained quantification and scoring of unstructured text-based input data.

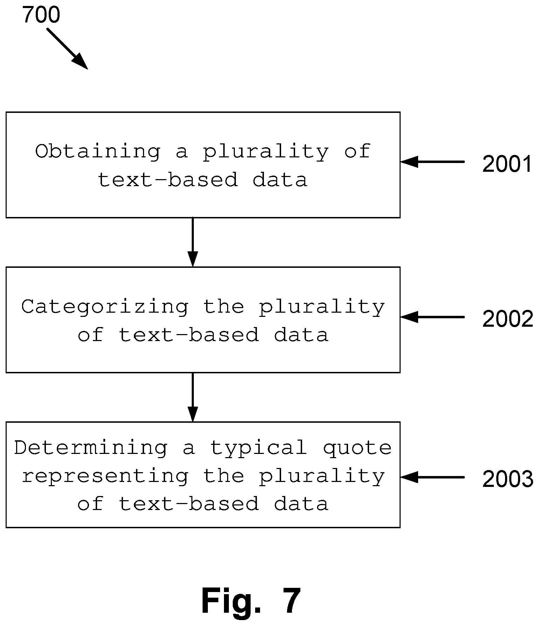

Fig. 7 is illustrating a method 700 of extracting typical quotes from text-based data. The method may be a computer implemented method or a computer program. The method may be implemented on a computer-computer readable medium.

The method may include obtaining a plurality of text-based data 2001 from a plurality of users or sources. Each text-based data of the plurality of text-based data is provided by a user or a source from a plurality of users or sources. The text-based data may be described as unstructured. This step is similar to what has been described previously in this application. The text-based data may come from open question forms answered by users, such as employers, customers etc. In other examples, the text-based data may come from open sources, such as social media platforms or traditional media etc.

The method may further include categorizing 2002 the plurality of text-based data by at least determining a typical category and a typical sentiment. The determined typical sentiment is associated with the typical category. Additionally, in some examples, a typical length of the plurality of text-based data may also be determined.

In some examples, determining the typical category and the typical sentiment includes finding at least one category word in each text-based data of the plurality of text-based data related to at least one category and at least one sentiment word associated with each of the at least one category word found in each text-based data of the plurality of text-based data. Each category may include a plurality of associated category words, similar to what has previously been described above, in relation to Figs. 1 to 6. Characterizing the plurality of text-based data to extract a typical category may therefore be performed by going through each text-based data for category words associated with different categories. The categories may relate to subject of interest. In some examples, the categories may be pre-defined, and a dictionary of category words used for extracting the typical category may be used. Each category may have its own dictionary of associated category words. The dictionary may be generated as described above using open-source materials. In some examples, the dictionary is the same as the dictionary used when characterising the plurality of text-based data.

To extract the typical sentiment, pre-defined sentiments categories may be used. For each pre-defined sentiment category, a dictionary with associated sentiment words may be applied. The dictionary may be obtained using open-source material as previously described or may be lists of pre-defined terms. To extract an associated sentiment from a text-based date input, a moving window may be applied to find sentiment words withing a defined proximity to a category word. The moving window can be defined as previously described, wither by training on open-source material or as a pre-defined number of words.

Additionally, and/or alternatively, in some examples, categorizing may include quantifying at least one category word in the plurality of text-based data to determine the typical category. This may be done by going through each text-based data one by one and extract the category words associated with any of the defined categories.

Similarly, categorizing may include quantifying the sentiment words in the plurality of text-based data to determine the typical sentiment. This may be done by going through each text-based data one by one and extract the relevant sentiment words associated with an extracted category word. A relevant sentiment word may be a word which falls under any of the defined sentiments.

Additionally, and/or alternatively, categorizing may in some examples include quantifying a length of each text-based data of the plurality of text-based data to determine the typical length of the plurality of text-based data. For example, determine the typical length of those text-based data from the plurality of text-based data that includes a category word related to the typical category and a sentimental word related to the typical sentiment.

This may for example be conducted by defining a typical length of the plurality of text-based data as a median or average value of the length of each text-based data of the plurality of text-based data. For example, determining the determining the median or average amount of words in those text-based data from the plurality of text-based data that includes a category word related to the typical category and a sentimental word related to the typical sentiment.

Additionally, and/or alternatively, categorizing may in some examples include quantifying a distance between the category word and an associated sentiment word for each text-based date of the plurality of text-based data.

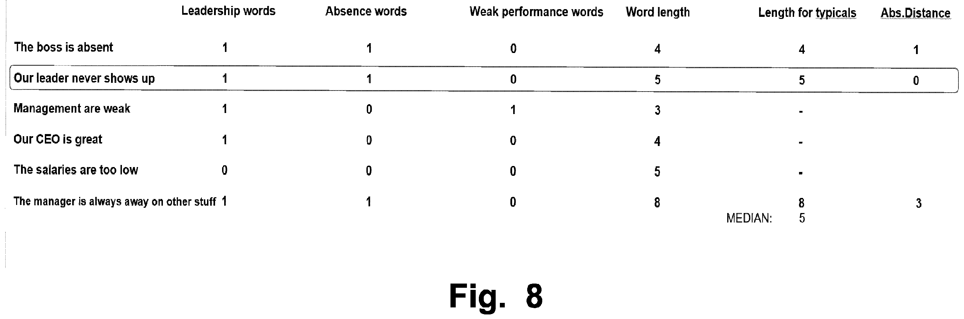

Additionally, and/or alternatively, in some examples, the categorising the plurality of the text-based data is conducted using a vector system, such as a 2-dimensional vector. An example of a vector is described in relation to Fig. 8.

Additionally, the method may include determining 2003 a typical quote representing the plurality of text-based data based on the typical category and the typical sentiment. The typical quote is a quote that can be considered as the most representative for the obtained plurality of text-based data.

In some examples is the typical quote selected from the plurality of text-based data based on which of the text-based data closest matching at least the typical length of the plurality of text-based data, the typical category and the typical sentiment. The matching of the typical length may be determined as the shortest absolute distance between the number of words in a text-based data to a median or average of words for a typical quote.

Alternatively, in some examples may the method generating a synthetic quote by combining a name of the typical category and a name of the typical sentiment. The typical quote may in this case not be an exact quote from the plurality of text-based data but a synthetically generated quote representing the plurality of text-based data.

Alternatively, in some further examples may the typical quote be determined as the text-based data having the most typical distance between the category word and an associated sentiment word. In some other examples may the typical quote be determined as the text-based data having the shortest distance between the category word and an associated sentiment word. In some other examples may the typical quote be determined as the text-based data having a predefined distance between the category word and an associated sentiment word, such as 1 word, 2 words, 3 words etc.

Fig. 8 is illustrating of a schematic example of extracting typical quotes from text-based data. In this example, a company wants to know how the employers feel about the leadership, hence "leadership" is the category used. Further categories could have been defined, such as "salary" and Two sentiments associated with the "leadership" have been defined. The sentiments are related to "Absence" and "weak performance". For the categorization, the plurality of text-based data is divided and presented in the left column. For each text-based data in the left column, a dictionary is used to determine any category words. If a category word is found related to any of the predefined categories, it is noted such as noted in a vector. A sentiment word associated with the category is then obtained for each text-based data. In the present case 5 out of 6 text-based data point included a category word related to "leadership" while one related to the category "salary". The typical category may therefore be determined as "leadership". The same is then done for the sentiment, where sentiment words related to the sentiment "absence" where most common, hence "absence" is the typical sentiment.

It can therefore be determined that the most typical quote is having both a category word related to "leadership" and "absence"" mentioned, not more, not less.

The next step may be to determine the word length for each text-based data. The typical word length is then determined based on the text-based data that includes both a category word related to "leadership" and a sentiment word related to "absence". In the present case the typical word length is the median number of words and is calculated to be equal to 5. Using the shortest absolute distance as a parameter, the second text-based data "Our leader never shows up" is the most representative quote as it includes both a category word related to the typical category, a sentiment word related to the typical sentiment and having a typical word length of 5. Should there have been more than one text-based data that fulfilled the criterion, the first found may be the quote determined to be a representing typical quote.

Should a synthetic quote be generated instead, the quote would be "leadership absent" based on using the name of the category and the sentiment being most typical. If further categories and/or sentiments are found, all category names and associated sentiments may be used for the quote.

In case the distance between the category word related to the typical category and the sentiment word related to the typical sentiment is used as a parameter for the categorization, and the text-based data having the least number of words therebetween is used as a criterion, the first text-based data "The boss is absent" would have been selected as the quote being most representative. Again, should there have been more than one text-based data that fulfills the criterions, the first found may be the quote determined to be a representing typical quote.

### Example 1

The first example relates to computer game optimization. The herein described method was applied on 37456 Youtube comments written as a response to a published trailer for a new game. A software implementing the method categorized and structured data to find all topics and what was good and bad.

The results were benchmarked to comparison games to find out whether the game would be a commercial success or not.

Out of the 37456 comments, 6494 comments were found to be clearly positive and 1741 comments were found to be clearly negative.

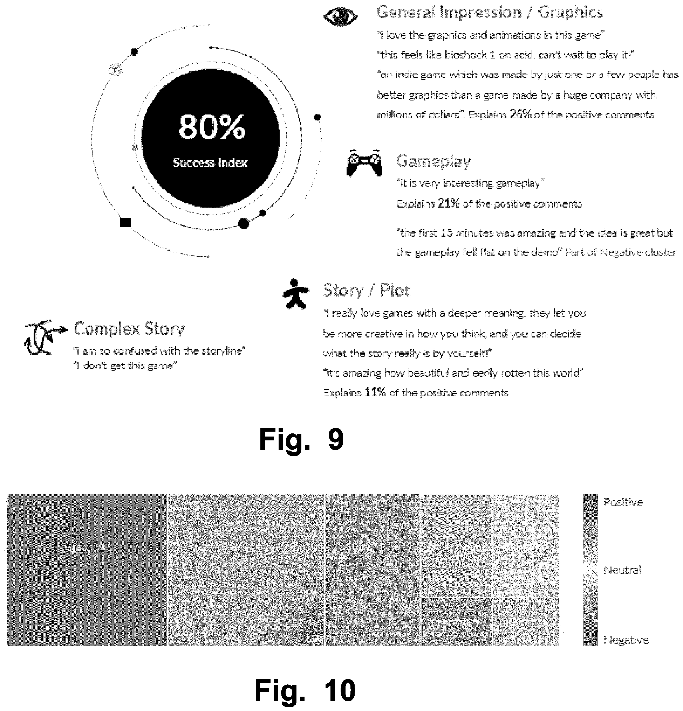

The most common factors behind the positive comments were the combination of a unique story/plot, characters and most importantly overwhelmingly graphics and gameplay. Reference to other titles, Dishonored and Bioshock, tended to be positive. Negative explained by Gameplay not to be on par with the trailer and to complex story. Fig. 9 illustrates a representation of the result including representative quotations for each cluster. Fig. 10 illustrates factors that explained >90% of the positive impressions. Box sizes are in proportion to the number of comments. As can be seen in the figure, graphics was extracted to be the most commentated category with highest positive sentiment followed by gameplay, story/plot, characters and music, sound, narration. Slightly less positive, but still with positive sentiment were references and comparisons to Bioshock and Dishonored.

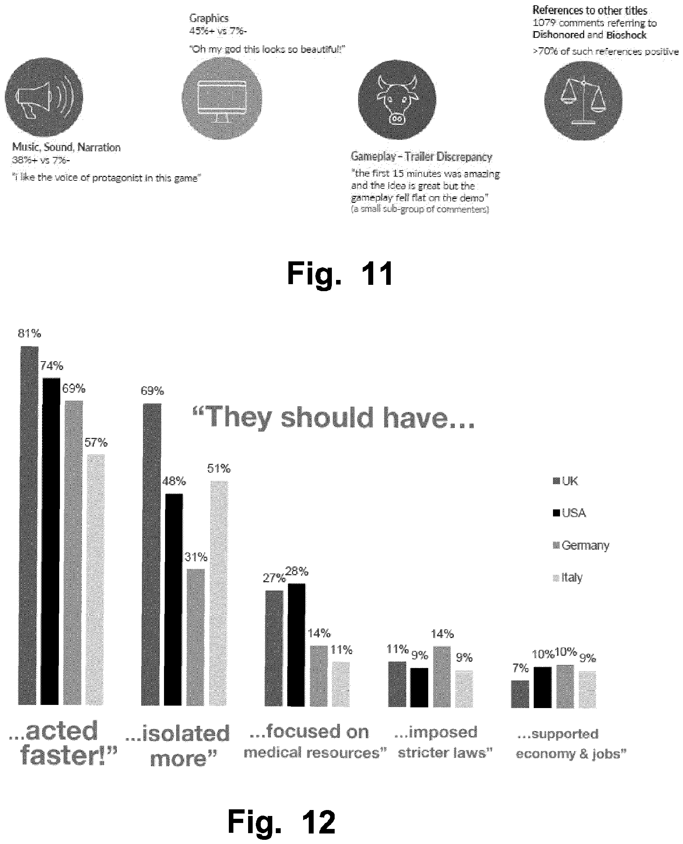

Other statistical finding with representative quotes from the comments can be seen in Fig. 11.

### Example 2

This survey related to Corona attitudes in four different countries. The number of participants were 2006 respondents from UK, USA, Italy and Germany.

In this example, the answers have been profiled and clustered into their geographical location. In Fig. 12, a narrative analysis of completely open text responses is presented. The herein described algorithm found 11 distinct categories whereof these are the five most common.

The present invention has been described above with reference to specific examples. However, other examples than the above described are equally possible within the scope of the disclosure. Different method steps than those described above, performing the method by hardware or software, may be provided within the scope of the invention. The different features and steps of the invention may be combined in other combinations than those described. The scope of the disclosure is only limited by the appended patent claims.

The indefinite articles "a" and "an," as used herein in the specification and in the claims, unless clearly indicated to the contrary, should be understood to mean "at least one." The phrase "and/or," as used herein in the specification and in the claims, should be understood to mean "either or both" of the elements so conjoined, i.e., elements that are conjunctively present in some cases and disjunctively present in other cases.

## Claims

1. A computer implemented method of extracting typical quotes from text-based data, the method comprising:
obtaining a plurality of text-based data from a plurality of users or sources, wherein each text-based data of said plurality of text-based data is provided by a user or a source from said plurality of users or sources, said text-based data is unstructured;
categorizing said plurality of text-based data by at least determining a typical category and a typical sentiment; wherein said typical sentiment is associated to said typical category; and
determining a typical quote representing said plurality of text-based data based on said typical category and said typical sentiment.

2. The computer implemented method of claim 1, wherein determining said typical category and said typical sentiment includes finding at least one category word in each text-based data of said plurality of text-based data related to at least one category and at least one sentiment word associated with each of said at least one category word found in each text-based data of said plurality of text-based data.

3. The computer implemented method of any of claims 1 or 2, wherein categorizing includes quantifying a length of each text-based data of said plurality of text-based data to determine a typical length of said plurality of text-based data.

4. The computer implemented method of claim 3, wherein said typical length of said plurality of text-based data is defined as a median or average value of said length of each text-based data of said plurality of text-based data.

5. The computer implemented method of any of any of claims 2 to 4, wherein categorizing includes quantifying said at least one category word in said plurality of text-based data to determine said typical category.

6. The computer implemented method of any of claims 2 to 5, wherein categorizing includes quantifying said sentiment words in said plurality of text-based data to determine said typical sentiment.

7. The computer implemented method of any of claims 3 to 6, wherein said typical quote is selected from said plurality of text-based data based on which of said text-based data closest matching at least said typical length of said plurality of text-based data, said typical category and said typical sentiment.

8. The computer implemented method of any of claims 1 to 6, generating a synthetic quote by combining a name of said typical category and a name of said typical sentiment.

9. The computer implemented method of any of claims 2 to 7, wherein a distance between said category word and an associated sentiment word is used as a parameter when selecting said quote from said plurality of text-based data.

10. The computer implemented method of any of claims 1 to 9, categorising each of said text-based data using a vector system, such as a 2-dimensional vector.

11. The computer implemented method of any of claims 1 to 10, wherein a dictionary is created for said at least one of category words and unique words, and related sentiment words and/or expressions surrounding said at least one of category words and unique words.

12. The computer implemented method of claim 11, wherein said dictionary is built using open-source data.

13. The computer implemented method of any of claims 11 to 12, adapting said dictionary depending on an area of said plurality of text-based data.

14. A computer program comprising instructions which, when the program is executed by a computer, cause the computer to carry out the method of any of claims 1 to 13.

15. A computer-readable medium comprising instruction which, when executed by a computer, cause the computer to carry out the method of any if claims 1 to 13.
